# EUROPÄISCHE PATENTSCHRIFT

(11) **EP 1 661 471 B1**
(45) Veröffentlichungstag und Bekanntmachung des Hinweises auf die Patenterteilung: **07.05.2008**
(21) Anmeldenummer: 04028238.6
(22) Anmeldetag: 29.11.2004
(51) Int. Cl.: A23N 12/02

(54) **Trenn- und Überleitvorrichtung für Hackfrüchte**
Separating and transferring device for tuberous products
Appareil d'entraînement et de séparation pour des produits tubéreux

(43) Veröffentlichungstag der Anmeldung: 31.05.2006
(73) Patentinhaber: Franz Grimme Landmaschinenfabrik GmbH & Co. KG., D-49401 Damme (DE)
(72) Erfinder: Kalverkamp, Klemens, 49401 Damme (DE)
(74) Vertreter: Bünemann, Egon

(56) Entgegenhaltungen:
- EP-A- 1 082 912
- US-A- 5 775 435

## Beschreibung

Die Erfindung bezieht sich auf eine Trenn- und Überleitvorrichtung für Hack-, Knollen- od.dgl. Früchte in einer Ausbildung gemäß dem Oberbegriff des Anspruchs 1.

Ausgehend von einer Vorrichtung, wie sie aus der EP-A-1 082 912 bekannt ist, befaßt sich die Erfindung mit dem Problem, die Trenn- und die Überleitfunktion zu verbessern.

Die Erfindung löst dieses Problem durch eine Vorrichtung mit den Merkmalen des Anspruchs 1. Hinsichtlich weiterer Ausgestaltungen wird auf die Ansprüche 2 bis 12 verwiesen.

Durch die besondere, außermittige Anordnung der Mitnehmerrippen zu den ihnen zugeordneten Ausnehmungen ergibt sich für den Bereich in Drehrichtung vor den Mitnehmerrippen eine erhöhte Steifigkeit des Mantelteils der Walzensegmente, so daß bei verbesserter Krauttrennfunktion die Gefahr vermindert ist, daß insbesondere kleine Kartoffeln infolge Einsinkens in den Mantelteil mit durch den Trennspalt zwischen den ein Paar bildenden Walzen der Trenn- und Überleitvorrichtung hindurchgezogen werden.

Weitere Einzelheiten und Wirkungen ergeben sich aus der nachfolgenden Beschreibung und der Zeichnung, in der ein Ausführungsbeispiel des Gegenstands der Erfindung näher veranschaulicht ist. Im einzelnen zeigen:
- Fig. 1: eine perspektivische Ansicht eines Walzensegmentes als Bestandteil der ersten Walze der Trenn- und Überleitvorrichtung,
- Fig. 2: eine Seitenansicht des Walzensegmentes, in der unteren Hälfte im Schnitt,
- Fig. 3: eine Stirnansicht der linken Stirnseite des Walzensegments in Fig. 2,
- Fig. 4: eine Stirnansicht der rechten Stirnseite des Walzensegments in Fig. 2,
- Fig. 5: eine abgebrochene Schemadarstellung eines Walzensegmentbereiches zur Veranschaulichung von Einzelheiten der Ausbildung der Mitnehmerrippen und ihrer Zuordnung zu ihrer Ausnehmung im Mantelteil des Walzensegmentes,
- Fig. 6: eine schematische Seitenansicht einer Förderstrecke einer Erntemaschine, beispielsweise eines Kartoffel- oder Rüben-Vollernters, und
- Fig. 7: eine schematische Draufsicht zu Fig. 6 zur Veranschaulichung unterschiedlicher Verläufe der Mitnehmerrippen der zu einer Walze zusammengesetzten Walzensegmente.

Die Trenn- und Überleitvorrichtung für Hack-, Knollen od.dgl. Früchte wie Kartoffeln, Futter- und Zuckerrüben, Mohrrüben, Chicorée, Zwiebeln etc. besteht aus zumindest einem Paar Walzen 1,2, die drehbar gelagert und mittels eines Antriebs (nicht dargestellt) gegenläufig antreibbar sind. Die beiden Walzen 1,2 eines Walzenpaares sind einander dicht benachbart angeordnet und begrenzen zwischen sich einen Durchtrittsspalt 3, durch den hindurch Krautteile, Erdreich und sonstige abzutrennenden Teile abführbar sind. Der Abstand der Walzen 1,2 zueinander ist dabei so gewählt, daß die Walzen 1,2 einander partiell berühren, wie nachfolgend noch beschrieben wird.

Die Trenn- und Überleitvorrichtung kann in stationären Anlagen zum Einsatz gelangen, findet jedoch insbesondere Anwendung in Erntemaschinen wie Kartoffel- oder Rübenvollerntern, in denen die Trenn- und Überleitvorrichtung mittels Förderer 3,4 in Richtung 5 mit einem Gutstrom beaufschlagt werden.

Die jeweils erste Walze 1 eines Walzenpaares besteht aus koaxial aneinander grenzenden Walzensegmenten 6, die beispielsweise eine Arbeitsbreite von 175 mm haben und beispielsweise mit zehn Walzensegmenten 6 eine Walze 1 mit einer Arbeitsbreite von 175 cm bilden. Die untereinander gleichen Walzensegmente 6 bestehen aus einem Mantelteil 7 aus elastisch nachgiebigem Material, vorzugsweise Polyurethan, und sind auf der zylindrischen Außenfläche 17 des Mantelteils 7 mit wendelförmigen, vorstehenden Mitnehmerrippen 8 versehen, von denen bevorzugt vier, statt dessen aber auch sechs oder acht Mitnehmerrippen vorgesehen sein können, die gleichmäßig über den Umfang des Mantelteils 7 des Walzensegmentes 6 verteilt angeordnet sind.

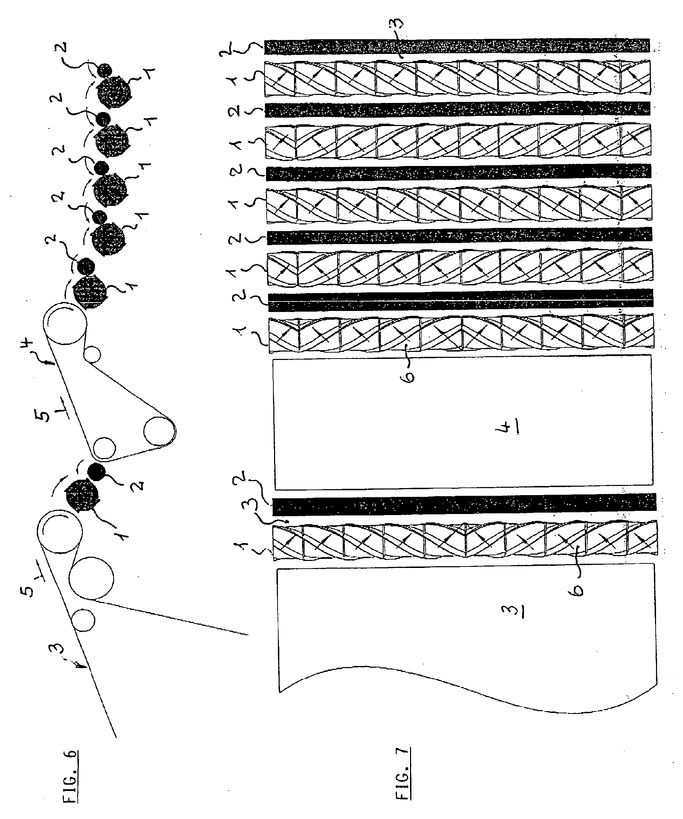

Die Mitnehmerrippen 8 können rechts steigend auf dem Umfang der Mantelteile 7 der Walzensegmente 6 verlaufen, können jedoch statt dessen auch eine links steigende Anordnung haben. Bevorzugt werden in Walzen 1 Walzensegmente 6 mit rechts und solche mit links steigenden Mitnehmerrippen 8 vorgesehen, so daß unterschiedliche Gruppierungen innerhalb der Walze 1 angeordnet werden können. Dadurch können die Seitenförderungstendenzen der Mitnehmerrippen 8 gegeneinander aufgehoben oder Seitenförderungstendenzen zu Gutverteilungsfunktionen eingesetzt werden. Fig. 7 zeigt bei dem in Gutstromrichtung 5 ersten Walzenpaar fünf benachbarte Walzensegmente 6 mit rechts und fünf benachbarte Walzensegmente 6 mit links steigenden Mitnehmerrippen 8, eine Anordnung, bei der die Seitenförderungstendenzen gegeneinander aufgehoben werden. Bei den dem Förderer 4 nachgeordneten Walzenpaaren sind unterschiedliche Gruppierungen vorgesehen, die die Trenn-, Reinigungs- und Überleitfunktionen der Walzenpaare durch Wechsel der Seitenförderungstendenzen oder durch eine Ausbreitungsfunktion verstärken können.

Jeder Mitnehmerrippe 7 ist eine im Querschnitt bogenschlitzförmige Ausnehmung 9 im Innern des Mantelteils 7 zugeordnet, die unter ihrer Mitnehmerrippe 8 im Mantelteil 7 in paralleler Wendelung verläuft. Dabei erstrecken sich die Mitnehmerrippen 8 jeweils entlang dem in Drehrichtung der Walze 1 vorderen Endbereich der zugeordneten Ausnehmung 9, so daß sich der Hauptteil der Ausnehmung 9 im Bereich in Drehrichtung hinter der jeweiligen Mitnehmerrippe 8 befindet. Der vordere Endpunkt 10 einer Ausnehmung 9 läuft dem rückwärtigen Endpunkt 11 einer zugeordneten Mitnehmerrippe 8 um einen Zentriwinkel 12 im Bereich von vorteilhaft etwa 20° bis 30°, vorzugsweise etwa 25°, voraus.

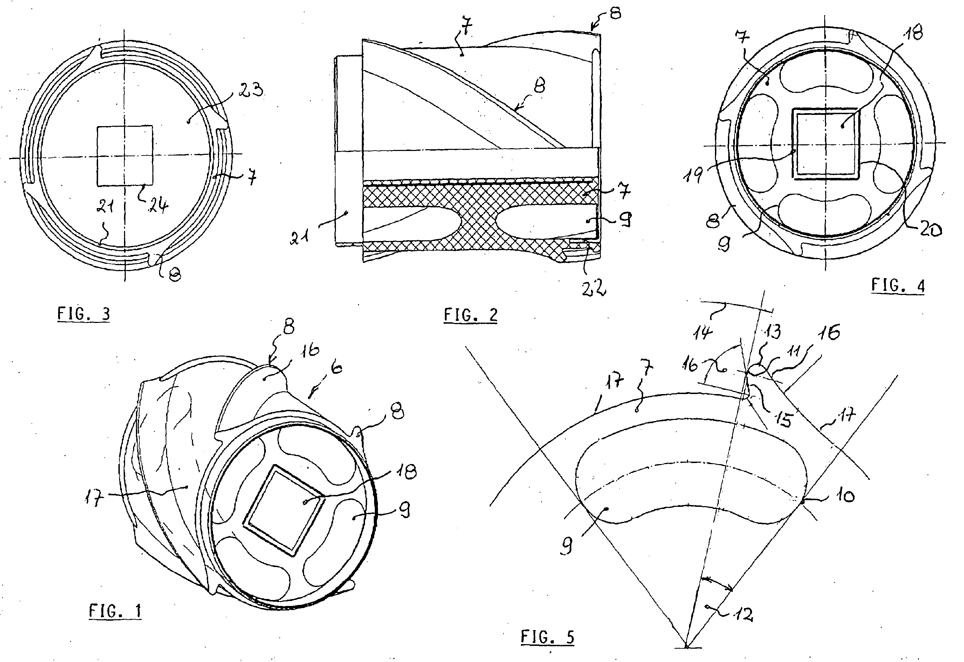

Das freie Ende der Mitnehmerrippen 8 ist von einem Kreisbogen 13 begrenzt, der auf der der Drehrichtung (Pfeil 14 in Fig. 5) der Walze 1 abgewandten Seite in eine gerade Rückenfläche 15 der Mitnehmerrippe 8 übergeht. Diese gerade Rückenfläche 15 schließt mit einer Tangente durch den rückwärtigen Fußpunkt der Mitnehmerrippe 8 einen sich gegen Drehrichtung der Walze 1 öffnenden Winkel 16 von vorteilhaft etwa 60° bis 70°, vorzugsweise etwa 65°, ein. Durch diese Ausgestaltung der Mitnehmerrippen 8 können diese zwar eine Ausweichbewegung entgegen der Drehrichtung der Walze 1 ausführen, jedoch ist diese begrenzt mit der Folge, daß die Rippe einer Verformung einen erheblichen Widerstand entgegensetzt und dementsprechend eine kräftige Mitnahmewirkung auf beispielsweise Kraut ausübt.

Die Vorderseite 16 der Mitnehmerrippen ist vorzugsweise leicht konkav gestaltet und dabei von einem Abschnitt eines Kreisbogens gebildet, der absatzfrei in die Umfangsfläche 17 des Mantelteils 7 einerseits und in den das Rippenende umgrenzenden Kreisbogen 13 andererseits übergeht. Diese Ausgestaltung der Mitnehmerrippe 8 erhöht ihre von der Vorderseite ausgehende Mitnahmewirkung, wobei gleichzeitig sichergestellt ist, daß sich an der Rippe keine Ablagerungen absetzen können.

Die Mitnehmerrippen 8 erstrecken sich wie dargestellt vorteilhaft über einen Zentriwinkelbereich des Mantelteils 7 eines Walzensegments 6 von etwa 90°, wobei die Mitnehmerrippen 8 eine Steigung P von 700 mm haben, d.h. die Länge einer sich über 360° erstreckenden Mitnehmerrippe 8 beträgt 700 mm. Die Ausnehmungen 9 haben im Querschnitt eine Erstreckung in Umfangsrichtung über einen Zentriwinkel von etwa 70° - 80°, vorzugsweise etwa 75°, so daß Manteilteile 7 der Walzensegmente 6 der Walze 1 insgesamt eine erhebliche elastische Nachgiebigkeit darbieten.

Der Mantelteil 7 des Walzensegmentes 6 weist eine viereckige, rechtwinklig begrenzte Durchgangsöffnung 18 auf, die von zwei einander diametral gegenüberliegenden Winkelstücken 19,20 aus Metallblech umfangsseitig begrenzt ist, so daß eine sichere Drehmomentübertragung von einer Vierkantwelle auf die Walzensegmente 6 sichergestellt ist.

Der Mantelkörper 7 jedes Walzensegmentes 6 ist auf einer Stirnseite, in Fig. 2 der linken Stirnseite, mit einem axial vorstehenden, ringförmigen Zentrierflansch 21 und dabei auf der gegenüberliegenden Stirnseite mit einer ringnutförmigen Öffnung 22 für die Aufnahme des Zentrierflansches 21 eines benachbarten Walzensegmentes 6 versehen, so daß die auf einer Antriebswelle aufgereihten Walzensegmente 6 einen geschlossenen Walzenkörper darbieten.

Der Mantelkörper 7 jeden Walzensegmentes weist auf der mit dem Zentrierflansch 21 versehenen Stirnseite ein die Ausnehmungen 9 einseitig abschließendes Verschlußteil 23 auf, das eine der Durchgangsöffnung 18 im Mantelkörper 7 des Walzensegmentes 6 entsprechende Öffnung 24 für den Durchgang einer die Walzensegmente 6 der Walze 1 tragenden Antriebswelle aufweist. Auch dieses Verschlußteil ist elastisch verformbar, so daß eintretende Verformungen im Bereich des Stirnendes des Wandsegmentes aufgefangen werden können. Die Verschlußteile 23 stellen sicher, daß irgendwelche in die Ausnehmungen 9 hineingelangenden Fremdkörper auf den Bereich eines Walzensegmentes 6 beschränkt bleiben und sich nicht über die gesamte Länge einer Walze verteilen können.

Im Betrieb laufen normalerweise die erste und die zweite Walze 1,2 des zumindest einen Walzenpaares der Trenn- und Überleitvorrichtung mit gleicher Umfangsgeschwindigkeit um, so daß sich die Mitnehmerrippen 8 reibungsfrei auf der zweiten Walze abwälzen. In Fällen mit erhöhtem Reinigungsbedarf für das die Trenn- und Überleitvorrichtung überlaufende Gut kann der ersten Walze 1 auch eine höhere Umfangsgeschwindigkeit als der zweiten Walze 2 vorgegeben werden mit der Folge, daß die Mitnehmerrippen 8 mit einer gewissen Aufschlagwirkung auf den Umfang der zweiten Walze 2 auftreffen, wodurch die Reinigungswirkung verstärkt wird. Gleichzeitig tritt auch eine Reinigungswirkung an der Oberfläche der zweiten Walze auf, da die Mitnehmerrippen 8 die Oberfläche der zweiten Walze 2 in einer Relativbewegung überstreichen.

Die zweite Walze 2 innerhalb einer Walzenpaarung ist vorteilhaft als Glattwalze ausgebildet, wobei ihr Mantel z.B. aus Stahl bestehen kann.

## Patentansprüche

1. Trenn- und Überleitvorrichtung für Hack-, Knollen- od.dgl. Früchte, bestehend aus zumindest einem Paar drehbar gelagerter, mittels eines Antriebs gleich- oder gegenläufig antreibbarer Walzen (1,2), von denen die in Richtung (5) des zur Bearbeitung herangeförderten Gutstromes erste Walze (1) aus koaxial aneinander grenzenden Walzensegmenten (6) mit einem Mantelteil (7) aus elastisch nachgiebigem Material mit wendelförmigen, nach außen vorstehenden Mitnehmerrippen (8) und im Querschnitt bogenschlitzförmigen Ausnehmungen (9) im Innern des Mantelteils (7) besteht, und von denen die in Richtung des herangeförderten Gutstroms zweite Walze (2) als zylindrische Glattwalze ausgebildet ist, wobei jeder Mitnehmerrippe (8) eine gesonderte, unter dieser im Mantelteil (7) in paralleler Wendelung verlaufende innere Ausnehmung (9) zugeordnet ist, **dadurch gekennzeichnet, daß** sich die Mitnehmerrippen (8) jeweils entlang dem in Drehrichtung der Walze (1) vorderen Endbereich der zugeordneten Ausnehmung (9) erstrecken.

2. Vorrichtung nach Anspruch 1, **dadurch gekennzeichnet, daß** der vordere Endpunkt (10) einer Ausnehmung (9) dem rückwärtigen Endpunkt (11) einer zugeordneten Mitnehmerrippe (8) um einen Zentriwinkel (12) im Bereich von etwa 20°-30°, vorzugsweise etwa 25°, vorausläuft.

3. Vorrichtung nach Anspruch 1 oder 2, **dadurch gekennzeichnet, daß** das freie Ende der Mitnehmerrippen (8) von einem Kreisbogen begrenzt ist, der auf der der Drehrichtung der Walze abgewandten Seite in eine gerade Rückenfläche (15) der Mitnehmerrippe (8) übergeht, die mit einer Tangente durch den rückwärtigen Fußpunkt der Mitnehmerrippe (8) einen sich entgegen Drehrichtung der Walze (1) öffnenden Winkel von etwa 60° - 70°, vorzugsweise etwa 65°, einschließt.

4. Vorrichtung nach einem der Ansprüche 1 bis 3, **dadurch gekennzeichnet, daß** die Vorderseite der Mitnehmerrippen (8) konkav gestaltet und dabei von einem Abschnitt eines Kreisbogens gebildet ist, der absatzfrei aus der Umfangsfläche (17) des Mantelteils (7) einerseits und in den das Rippenende umgrenzenden Kreisbogen (13) andererseits übergeht.

5. Vorrichtung nach einem der Ansprüche 1 bis 4, **dadurch gekennzeichnet, daß** der Mantelteil jedes Walzensegmentes mit vier Rippen versehen ist und diese eine Steigung von P=700 mm haben.

6. Vorrichtung nach einem der Ansprüche 1 bis 5, **dadurch gekennzeichnet, daß** die Mitnehmerrippen (8) sich über einen Zentriwinkelbereich des Mantelteils (7) eines Walzensegments (6) von je etwa 90° erstrecken.

7. Vorrichtung nach einem der Ansprüche 1 bis 6, **dadurch gekennzeichnet, daß** die Ausnehmungen (9) im Querschnitt eine Erstreckung in Umfangsrichtung über einen Zentriwinkel von etwa 70° - 80°, vorzugsweise etwa 75°, aufweisen.

8. Vorrichtung nach einem der Ansprüche 1 bis 7, **dadurch gekennzeichnet, daß** der Mantelteil (7) des Walzensegmentes (6) eine viereckige, rechtwinklig begrenzte Durchgangsöffnung aufweist, die von zwei einander diametral gegenüberliegenden Winkelstücken umfangsseitig begrenzt ist.

9. Vorrichtung nach einem der Ansprüche 1 bis 8, **dadurch gekennzeichnet, daß** der Mantelkörper (7) jedes Walzensegmentes (6) auf einer Stirnseite mit einem axial vorstehenden, ringförmigen Zentrierflansch und auf der gegenüberliegenden Stirnseite mit einer ringnutförmigen Öffnung für die Aufnahme des Zentrierflansches (21) eines benachbarten Walzensegmentes (6) versehen ist.

10. Vorrichtung nach Anspruch 9, **dadurch gekennzeichnet, daß** der Mantelkörper (7) jedes Walzensegmentes (6) auf der mit dem Zentrierflansch versehenen Stirnseite ein die Ausnehmungen (9) einseitig abschließendes Verschlußteil (23) aufweist, das eine der Durchgangsöffnung (18) im Mantelkörper (7) des Walzensegmentes (6) entsprechende Öffnung (24) für den Durchgang einer die Walzensegmente (6) der Walze (1) tragenden Antriebswelle aufweist.

11. Vorrichtung nach einem der Ansprüche 1 bis 10, **dadurch gekennzeichnet, daß** die erste Walze (1) jeden Walzenpaares mit gleicher oder größerer Umfangsgeschwindigkeit als die zweite Walze (2) des Walzenpaares angetrieben umläuft.

12. Vorrichtung nach einem der Ansprüche 1 bis 11, **dadurch gekennzeichnet, daß** Walzensegmente (6) mit rechts steigenden Mitnehmerrippen (8) und Walzensegmente (6) mit links steigenden Mitnehmerrippen (8) vorgesehen sind und in unterschiedlichen Gruppierungen innerhalb der ersten Walze (1) angeordnet sind.

## Claims

1. Separating and transferring arrangement for root crops, tubers or the like crops, comprising at least one pair of rotatably mounted rollers (1, 2) able to be driven in the same or opposite directions by means of a drive, of which rollers (1, 2) that roller (1) which is the first in the direction (5) in which the flow of crop is fed in for processing comprises roller segments (6) which adjoin one another co-axially and which have a shell part (7) of elastic yielding material having helical, outwardly projecting entraining ribs (8) and, in the interior of the shell part (7), openings (9) which are in the form of arcuate slots in cross-section, and of which rollers (1, 2) that roller (2) which is second in the direction in which the flow of crop is fed in is in the form of a smooth, cylindrical roller, each entraining rib (8) having associated with it a separate inner opening (9) which extends below it in the shell part (7) in a parallel helix, **characterised in that** the entraining ribs (8) each extend along that end region of the associated opening (9) which is at the front in the direction of rotation of the roller (1).

2. Arrangement according to claim 1, **characterised in that** the front end point (10) of an opening (9) is in advance of the rear end point (11) of an associated entraining rib (8) by an angle at the centre (12) in the range of approximately 20° - 30° and preferably of approximately 25°.

3. Arrangement according to claim 1 or 2, **characterised in that** the free ends of the entraining ribs (8) are defined by arcs of circles which, on the side facing away from the direction of rotation of the roller, merge into a straight rear face (15) of the entraining ribs (8), which straight rear face (15) makes, with a tangent through the rear foot of the entraining rib (8), an angle of approximately 60° - 70°, and preferably of approximately 65°, which opens in the direction opposite to the direction of rotation of the roller (1).

4. Arrangement according to one of claims 1 to 3, **characterised in that** the front faces of the entraining ribs (8) are concave in shape and are formed in this case by a section of an arc of a circle which, without a step, runs from the circumferential surface (17) of the shell part (7) on the one hand to the arc of a circle (13) which defines the end of the rib on the other hand.

5. Arrangement according to one of claims 1 to 4, **characterised in that** each shell part of each roller segment is provided with four ribs and these are at a pitch of P = 700 mm.

6. Arrangement according to one of claims 1 to 5, **characterised in that** the entraining ribs (8) each extend over an angular range at the centre of the shell part (7) of a roller segment (6) of approximately 90°.

7. Arrangement according to one of claims 1 to 6, **characterised in that** the extent in cross-section, in the circumferential direction, of the openings (9) covers an angle at the centre of approximately 70° - 80°, and preferably of approximately 75°.

8. Arrangement according to one of claims 1 to 7, **characterised in that** the shell part (7) of the roller segment (6) has a quadrilateral through-aperture defined by right angles which is bounded at its circumference by two diametrically opposed angle-pieces.

9. Arrangement according to one of claims 1 to 8, **characterised in that** the shell part (7) of each roller segment (6) is provided, at one end-face, with an axially projecting annular locating flange and, at the opposite end-face, with an opening in the form of a groove to receive the locating flange (21) of an adjoining roller segment (6).

10. Arrangement according to claim 9, **characterised in that** the shell part (7) of each roller segment (6) has, at the end-face which is provided with the locating flange, a closing-off member (23) which closes off the openings (9) at one end which has an aperture (24) corresponding to the through-aperture (18) in the shell part (7) of the roller segment (6) to allow a drive shaft carrying the segments (6) of the roller (1) to pass through.

11. Arrangement according to one of claims 1 to 10, **characterised in that** the first roller (1) in each pair of rollers is driven in rotation at a peripheral speed equal to or greater than that of the second roller (2) in the pair of rollers.

12. Arrangement according to one of claims 1 to 11, **characterised in that** roller segments (6) having entraining ribs (8) which are helical clockwise and roller segments (6) having entraining ribs (8) which are helical anticlockwise are provided and are arranged in different groupings in the first roller (1).

## Revendications

1. Appareil d'entraînement et de séparation pour des produits tubéreux, des plantes sarclées ou analogues, se composant d'au moins une paire de rouleaux rotatifs (1, 2), pouvant être entraînés dans le même sens ou en sens contraire au moyen d'un dispositif d'entraînement, dont le premier rouleau (1) dans la direction (5) du courant de produits amenés pour le traitement se compose de segments de rouleau (6) coaxialement adjacents l'un à l'autre avec une partie d'enveloppe (7) en matière élastiquement déformable, présentant des nervures d'entraînement (8) en forme d'hélice saillantes vers l'extérieur et des évidements (9) de section transversale en forme de fente arquée à l'intérieur de la partie d'enveloppe (7), et dont le deuxième rouleau (2) dans la direction du courant de produits amenés pour le traitement est formé par un rouleau lisse cylindrique, dans lequel à chaque nervure d'entraînement (8) est associé un évidement intérieur séparé (9), situé en enroulement parallèle en dessous de celle-ci dans la partie d'enveloppe (7), **caractérisé en ce que** les nervures d'entraînement (8) s'étendent chaque fois le long de la région d'extrémité avant, dans le sens de rotation du rouleau (1), de l'évidement (9) associé.

2. Appareil selon la revendication 1, **caractérisé en ce que** le point extrême avant (10) d'un évidement (9) précède le point extrême arrière (11) d'une nervure d'entraînement (8) associée d'un angle au centre (12) de l'ordre d'environ 20°-30°, de préférence d'environ 25°.

3. Appareil selon la revendication 1 ou 2, **caractérisé en ce que** l'extrémité libre des nervures d'entraînement (8) est limitée par un arc de cercle, qui se prolonge sur le côté opposé au sens de rotation du rouleau par une face arrière droite (15) de la nervure d'entraînement (8), qui forme avec une tangente passant par le point du pied arrière de la nervure d'entraînement (8) un angle d'environ 60°-70°, de préférence d'environ 65°, s'ouvrant à l'opposé du sens de rotation du rouleau (1).

4. Appareil selon l'une quelconque des revendications 1 à 3, **caractérisé en ce que** le côté avant des nervures d'entraînement (8) est de forme concave et est en l'occurrence formé par un segment d'arc de cercle, qui d'une part sort sans épaulement hors de la surface périphérique (17) de la partie d'enveloppe (7) et d'autre part se prolonge par l'arc de cercle (13) délimitant l'extrémité de la rainure.

5. Appareil selon l'une quelconque des revendications 1 à 4, **caractérisé en ce que** la partie d'enveloppe de chaque segment de rouleau est pourvue de quatre nervures et celles-ci présentent un pas P = 700 mm.

6. Appareil selon l'une quelconque des revendications 1 à 5, **caractérisé en ce que** les nervures d'entraînement (8) s'étendent sur un arc d'angle au centre de la partie d'enveloppe (7) d'un segment de rouleau (6) chaque fois d'environ 90°.

7. Appareil selon l'une quelconque des revendications 1 à 6, **caractérisé en ce que** les évidements (9) présentent en section transversale une extension dans la direction périphérique couvrant un angle au centre d'environ 70°-80°, de préférence d'environ 75°.

8. Appareil selon l'une quelconque des revendications 1 à 7, **caractérisé en ce que** la partie d'enveloppe (7) du segment de rouleau (6) présente une ouverture de passage quadrangulaire, limitée à angles droits, qui est limitée en périphérie par deux pièces coudées, diamétralement opposées l'une à l'autre.

9. Appareil selon l'une quelconque des revendications 1 à 8, **caractérisé en ce que** le corps d'enveloppe (7) de chaque segment de rouleau (6) est pourvu sur un côté frontal d'une bride de centrage annulaire, axialement saillante, et sur le côté frontal opposé d'une ouverture en forme de rainure annulaire destinée à recevoir la bride de centrage (21) d'un segment de rouleau adjacent (6).

10. Appareil selon la revendication 9, **caractérisé en ce que** le corps d'enveloppe (7) de chaque segment de rouleau (6) comporte, sur le côté frontal pourvu de la bride de centrage, une pièce de fermeture (23) fermant d'un côté les évidements (9), qui présente une ouverture (24) correspondant à l'ouverture de passage (18) dans le corps d'enveloppe (7) du segment de rouleau (6) pour le passage d'un arbre d'entraînement portant les segments de rouleau (6) du rouleau (1).

11. Appareil selon l'une quelconque des revendications 1 à 10, **caractérisé en ce que** le premier rouleau (1) de chaque paire de rouleaux est entraîné à une vitesse périphérique égale ou supérieure à celle du deuxième rouleau (2) de la paire de rouleaux.

12. Appareil selon l'une quelconque des revendications 1 à 11, **caractérisé en ce que** des segments de rouleau (6) sont prévus avec des nervures d'entraînement (8) inclinées à droite et des segments de rouleau (6) sont prévus avec des nervures d'entraînement (8) inclinées à gauche, et sont disposés avec des groupages différents à l'intérieur du premier rouleau (1).
